(19) **Europäisches Patentamt**
**European Patent Office**
**Office européen des brevets**

(11) **EP 4 782 954 A1**

(12) **EUROPEAN PATENT APPLICATION**
published in accordance with Art. 153(4) EPC

(43) Date of publication:
**29.07.2026 Bulletin 2026/31**

(21) Application number: **25824408.6**

(22) Date of filing: **18.02.2025**

(51) International Patent Classification (IPC):
***G05D 3/10*** (2006.01)

(52) Cooperative Patent Classification (CPC):
**G01B 11/00; G01C 15/00; G05D 3/10**

(86) International application number:
**PCT/CN2025/077758**

(87) International publication number:
**WO 2026/001013 (02.01.2026 Gazette 2026/01)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **24.06.2024 CN 202410817240**

(71) Applicant: **Changzhou Huada Kejie Opto-Electro
Instrument Co., Ltd.
Changzhou, Jiangsu 213023 (CN)**

(72) Inventors:
• **ZHANG, Ou
hangzhou, Jiangsu 213023 (CN)**
• **MAO, Wenming
hangzhou, Jiangsu 213023 (CN)**
• **XU, Xiaolin
hangzhou, Jiangsu 213023 (CN)**
• **ZHANG, Kaifeng
hangzhou, Jiangsu 213023 (CN)**

(74) Representative: **Lambsdorff & Lange
Patentanwälte
Partnerschaft mbB
Grillparzerstraße 12A
81675 München (DE)**

(54) **LASER TRACKING METHOD AND LASER POSITIONING DEVICE**

(57) A laser tracking method, capable of reducing the time for a laser line to move to the center of a receiver, thus effectively improving the working efficiency of users. The method comprises: a laser emitting device emits a laser line towards a receiver, and a first distance d1 from a first receiving point for the laser line on a receiving window of the receiver to the center of the receiver is read, the length of the receiving window in the direction of the receiver being d; a driving device drives the laser emitting device to move towards the center of the receiver by a first movement angle $\Delta\alpha'$, and a second distance d2 from a second receiving point for the laser line on the receiving window to the center of the receiver is read; according to formula (1), acquiring a distance L between the laser emitting device and the center of the receiver, where L/d>100: L=(d1-d2) ÷tan ($\Delta\alpha'$) (formula (1)) ; according to formula (2), acquiring a second movement angle $\Delta\alpha$ by which the laser emitting device is to move: $\Delta\alpha$ =tan-1(d2÷L) (formula (2)) ; and, according to formula (3), determining the number m of pulses for the driving device to move: m= $\Delta a \div \Delta\theta$ (formula (3)), wherein $\Delta\theta$ is a unit movement angle of the laser emitting device corresponding to each pulse of movement of the driving device; and the driving device moves by m pulses, and, after moving by the second movement angle, the laser emitting device emits a laser line, the laser line being aligned with the center of the receiver.

Figure 2

**Description**

TECHNICAL FIELD

The application relates to the field of laser emitting devices, in particular to a laser tracking method and a laser positioning device.

BACKGROUND

The laser tool and the laser receiver can be used for automatic tracking and positioning, and belong to commonly used positioning tools in the field.When the laser line is outside the receiving window of the laser receiver, the position data fed back by the receiver is out of the receiving range; when the laser line is in the receiving window, the receiver feeds back the position distance difference from the receiving center; and when the laser line is at the receiving center, the distance data fed back by the receiver is 0.

In the prior art, in order to quickly and accurately position to a position center point, when the initial position of the laser line is in the receiving range or moves from outside the receiving window to the receiving range, because the distance L between the laser emitting tool and the receiver is uncertain, the following control logic is usually used: in the receiving range -> reading position information -> medium-speed rotation of a motor -> stopping of the motor -> reading position information -> slow-speed rotation of the motor, and the closer the position gets to the center point, the slower the motor speed becomes, preventing overshoot due to inertia and the subsequent need for reverse correction to locate the center. This approach requires multiple deceleration controls, resulting in a longer time for the motor to reach the center, with the control duration increasing as the length L increases.

SUMMARY

In order to overcome the technical defects, the application aims to provide a laser tracking method capable of reducing control time and accurately finding a positioning position.

Specifically, the application discloses a laser tracking method, which comprises the following steps:

A laser emitting device emits a laser line to a receiver, and a first distance d1 of a first receiving point of the laser line on a receiving window of the receiver from a center of the receiver is read, wherein the length of the receiving window towards the receiver is d;

A driving device drives the laser emitting device to move a first moving angle $\Delta\alpha'$ towards the center of the receiver, and a second distance d2 of a second receiving point of the laser line on the receiving window from the center of the receiver is read;

The distance L between the laser emitting device and the center of the receiver is obtained according to a formula (1), wherein L/d > 100:

$$L = (d1 - d2) \div \tan(\Delta\alpha') \qquad \text{Formula (1);}$$

The second moving angle $\Delta\alpha$ of the laser emitting device is obtained according to a formula (2):

$$\Delta\alpha = \tan^{-1}(d2 \div L) \qquad \text{Formula (2);}$$

The number m of pulses to be moved by the driving device is determined according to a formula (3):

$$m = \Delta\alpha \div \Delta\theta \qquad \text{Formula (3),}$$

The $\Delta\theta$ is a unit moving angle of the laser emitting device corresponding to each pulse moved by the driving device;

The driving device moves m pulses, and the laser emitting device emits the laser line after moving the second moving angle, and the laser line is aligned with the center of the receiver.

Preferably, the first moving angle is $\Delta\alpha' = n \times \Delta\theta$, wherein n is the number of pulses of the driving device.

Preferably, the laser emitting device is connected with the receiver through infrared signal, Bluetooth signal or WIFI signal.

In another aspect of the application, further provides a laser positioning device, characterized in that it applies the laser tracking method as described in any one of the foregoing embodiments.

Preferably, the laser positioning device includes a laser emission device configured to emit a laser line;

A receiver is communicatively connected to the laser emission device via infrared, Bluetooth, or Wi-Fi signals, and includes a receiving window for capturing the laser line and reading the reception point of the laser line on the receiving window. The length of the receiving window in the direction toward the receiver is d, and the distance between the center of the receiver and the laser emission device is L.

A driving device is used for driving the laser emitting device to move, and a unit moving angle of the laser emitting device corresponding to each pulse of the driving device is $\Delta\theta$.

After adopting the above technical solution, compared with the prior art, the present invention has the following beneficial effects: In the technical solution of the present invention, once the laser line falls within the receiving range of the receiver, it only needs to control the motor to move by several minimum step angles, and then calculate the number of step angle controls required to move to the center point based on known position values, after which the motor can be controlled to quickly move to the center position of the receiver. There is no need to repeatedly adjust the motor speed to find the center point of the receiver, which can reduce the time required for the laser line to move to the center of the receiver and effectively improve the user's work efficiency.

BRIEF DESCRIPTION OF DRAWINGS

Fig. 1 is a flow chart of a laser tracking method according to an embodiment of the application;

Fig. 2 is a schematic diagram of a laser positioning device according to an embodiment of the application;

Fig. 3 is a schematic diagram of the control timing sequence of the driving device in the laser positioning device according to an embodiment of the application.

DETAILED DESCRIPTION

The advantages of the application are further described below in combination with the drawings and specific embodiments.

The detailed description explains embodiments of the application, together with advantages and features, by way of example with reference to the drawings.

The terminology used in this disclosure is for the purpose of describing particular embodiments only and is not intended to be limiting of the disclosure. As used in this disclosure and the appended claims, the singular forms "a," "an" and "the" are intended to include the plural forms as well, unless the context clearly indicates otherwise. It will also be understood that the term "and/or" as used herein refers to and encompasses any and all possible combinations of one or more of the associated listed items.

It should be understood that, although the terms first, second, third, etc. can be used herein to describe various information, the information should not be limited to these terms. These terms are only used to distinguish one category of information from another. For example, without departing from the scope of the present disclosure, first information can also be referred to as second information, and similarly, second information can also be referred to as first information. Depending on the context, the word "if' as used herein can be interpreted as "when" or "upon" or "in response to determining."

In the description of the application, it needs to be understood that the terms "longitudinal", "transverse", "upper", "lower", "front", "rear", "left", "right", "vertical", "horizontal", "top", "bottom", "inner", "outer" and the like indicate the orientation or positional relationship based on the orientation or positional relationship shown in the drawings, and are only for the convenience of describing the application and simplifying the description, and do not indicate or imply that the device or element referred to must have a specific orientation, be constructed and operated in a specific orientation, and therefore cannot be understood as a limitation on the application.

In the description of the application, unless otherwise specified and limited, it needs to be explained that the terms "mounting", "connecting", "connection" should be understood in a broad sense, for example, it can be mechanical connection or electrical connection, it can be the communication inside two elements, it can be direct connection or indirect connection through intermediate medium, and the specific meaning of the above terms can be understood according to specific circumstances for those skilled in the art.

In the following description, suffixes such as "module", "part" or "unit" used for elements are merely intended for easy description of the specification and have no specific meaning or function.

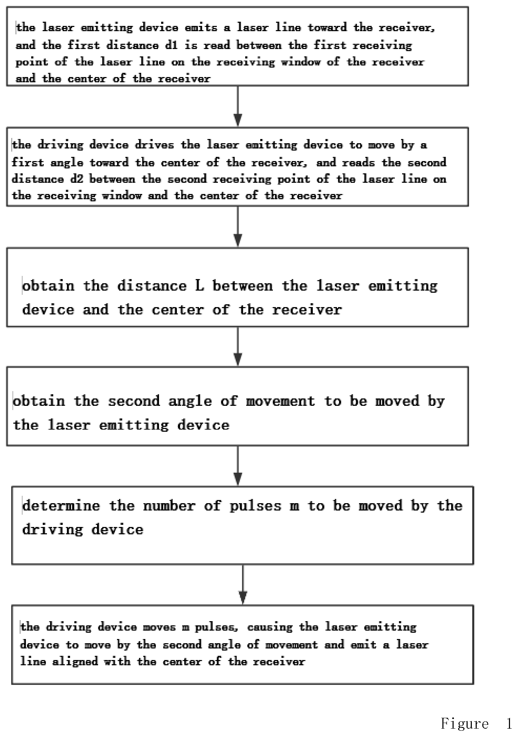

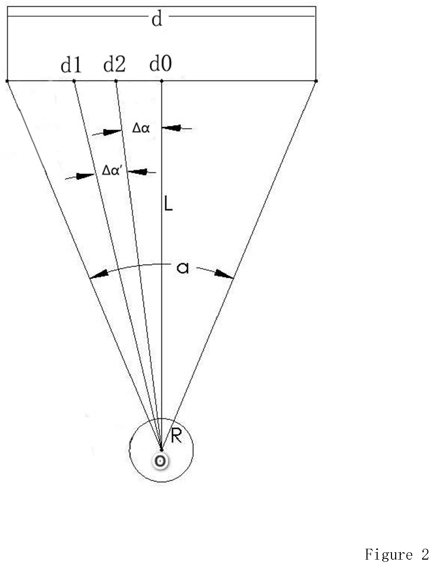

FIG. 1 is a flow chart of a laser tracking method in an embodiment of the application, and FIG. 2 is a schematic diagram of a laser positioning device using the laser tracking method in the embodiment. The laser tracking method in the embodiment includes the following steps:

The laser emitting device emits a laser line towards the receiver, and a first distance d1 of a first receiving point of the laser line on a receiving window of the receiver from the center of the receiver is read, wherein the length of the receiving window towards the receiver is d.

A driving device drives the laser emitting device to move a first moving angle $\Delta\alpha'$ towards the center of the receiver, and a second distance d2 of a second receiving point of the laser line on the receiving window from the center of the receiver is read.

The distance L between the laser emitting device and the center of the receiver is obtained according to formula (1), wherein L/d > 100:

$$L = (d1 - d2) \div \tan(\Delta\alpha') \qquad \text{Formula (1)};$$

The second moving angle $\Delta\alpha$ of the laser emitting device is obtained according to formula (2):

$$\Delta\alpha = \tan^{-1}(d2 \div L) \quad \text{Formula (2)};$$

The number m of pulses to be moved by the driving device is determined according to formula (3):

$$m = \Delta\alpha \div \Delta\theta \text{ Formula (3)},$$

The unit moving angle of the laser emitting device corresponding to one pulse of the driving device is $\Delta\theta$.

The driving device moves m pulses, the laser emitting device emits a laser line after moving the second moving angle, and the laser line is aligned with the center of the receiver.

In the embodiment, when the receiver receives the laser line, the laser emitting device is first driven to move a plurality of pulses, and the corresponding moving distance of the laser line on the receiver after moving is recorded, so that the straight-line distance L between the laser emitting device and the center of the receiver can be calculated. At this time, the path of the laser line, d2 and L form a right triangle, so that the angle corresponding to d2 can be calculated according to a trigonometric function, and the second moving angle $\Delta\alpha$ of the laser emitting device is obtained. Finally, since the unit moving angle of the laser emitting device corresponding to each pulse of the driving device is fixed, the number of pulses to be moved by the driving device can be obtained according to the second moving angle $\Delta\alpha$. The laser emitting device and the receiver in the embodiment can be connected through infrared signals, Bluetooth signals or WIFI signals.

In another embodiment of the application, a laser positioning device is provided, and the device is characterized in that the laser tracking method is applied, and the device specifically comprises:

a laser emitting device for emitting a laser line;

a receiver connected with the laser emitting device through infrared signals, Bluetooth signals or WIFI signals, the receiver comprising a receiving window for receiving the laser line and reading a receiving point of the laser line on the receiving window, the receiving window having a length d in the direction of the receiver, and the center of the receiver being at a distance L from the laser emitting device;

a driving device for driving the laser emitting device to move, the unit moving angle of the laser emitting device corresponding to one pulse of the driving device being $\Delta\theta$. The driving device can be a device that can be driven by a common motor in the art, the laser emitting device can be a device that can emit a laser in the art, and the receiver comprising a receiving window can be a device that can receive a laser line and read position information of the laser line in the art. The application is not limited in this regard, and any device that can achieve the above functions can be used. Moreover, the receiver and the laser emitting device communicate through wireless signals in the art, including but not limited to the connection modes listed in the embodiment.

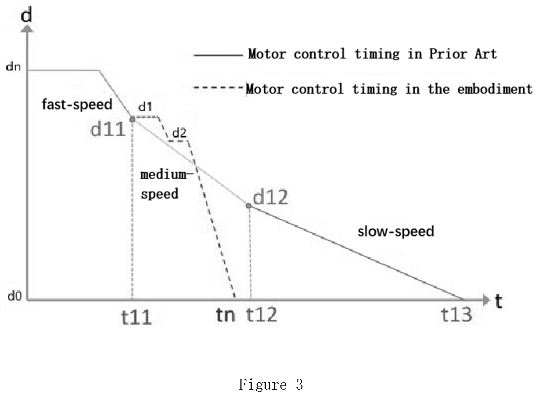

As shown in FIG. 3, the control timing of the motor of the driving device in the tracking method of the embodiment and the prior art is shown. It can be observed intuitively that in the prior art, in order to quickly and accurately position to the center point of the position, when the initial position of the laser line is in the receiving range or moves from outside the receiving range to the receiving range, due to the uncertainty of the distance L, the control logic is generally as follows: in the receiving range -> reading the position information -> medium-speed rotation of the motor -> stopping the motor -> reading the position information -> slow-speed rotation of the motor, and the closer to the center point of the position, the slower the motor speed, so as to prevent the motor from overshooting due to inertia and thus needing to be reversed again to find the center point of the position. That is, in the prior art, multiple steps need to be adjusted to align the laser emitting device to the center of the receiver. Relatively, in the technical solution of this embodiment, the motor only needs to be adjusted once, and can be directly adjusted to the center of the receiver with a single timing sequence, effectively shortening the overall adjustment cycle time.

Through the above method, after the first movement, the laser moving device can be directly adjusted so that the laser line it emits is aligned with the center of the laser receiving device, eliminating the need for multiple adjustments in the existing technology, saving operation time and improving work efficiency.

It should be noted that the embodiment of the application has better implementation, and does not limit the application in any form. Any skilled person in the art can change or modify the disclosed technical content to obtain equivalent effective embodiments. As long as the content is not deviated from the technical solution of the application, any modification or equivalent change and modification of the above embodiment according to the technical essence of the application still belongs to the scope of the technical solution of the application.

**Claims**

1.  A laser tracking method, comprising:

    emitting, by a laser emitting device, a laser line towards a receiver, and reading a first distance d1 of a first receiving point of the laser line on a receiving window of the receiver from a center of the receiver, wherein a length of the receiving window towards the receiver is d;
    driving, by a driving device, the laser emitting device to move a first moving angle $\Delta\alpha'$ towards the center of the receiver, and
    reading a second distance d2 of a second receiving point of the laser line on the receiving window from the center of the receiver;
    obtaining a distance L of the laser emitting device from the center of the receiver according to a formula (1), wherein L/d > 100;

    $$L = (d1 - d2) \div \tan(\Delta\alpha') \text{ Formula (1) ;}$$

    obtaining a second moving angle $\Delta\alpha$ of the laser emitting device to be moved according to a formula (2) :

    $$\Delta\alpha = \tan^{-1}(d2 \div L) \text{ Formula (2) ;}$$

    determining a pulse number m of the driving device to be moved according to a formula (3) :

    $$m = \Delta\alpha \div \Delta\theta \text{ Formula (3),}$$

    $\Delta\theta$ is a unit moving angle of the laser emitting device corresponding to one pulse of the driving device;
    the driving device moves m pulses, the laser emitting device emits the laser line after moving the second moving angle, and the laser line is aligned with the center of the receiver.

2.  The laser tracking method of claim 1, wherein
    the first moving angle is $\Delta\alpha' = n \times \Delta\theta$, wherein n is the pulse number of the driving device.

3.  The laser tracking method of any one of claims 1-2, wherein
    the laser emitting device and the receiver are connected through infrared signals, Bluetooth signals, or WIFI signals.

4.  A laser positioning device, applying the laser tracking method of any one of claims 1-3.

5.  The laser positioning device of claim 4, comprising:

    a laser emitting device, configured to emit a laser line;
    a receiver, connected with the laser emitting device through infrared signals, Bluetooth signals, or WIFI signals, wherein the receiver comprises a receiving window, configured to receive the laser line and read a receiving point of the laser line on the receiving window, wherein a length of the receiving window towards the receiver is d, and a distance between a center of the receiver and the laser emitting device is L;

a driving device, configured to drive the laser emitting device to move, wherein a unit moving angle of the laser emitting device corresponding to one pulse of the driving device is $\Delta\theta$.

the laser emitting device emits a laser line toward the receiver, and the first distance d1 is read between the first receiving point of the laser line on the receiving window of the receiver and the center of the receiver

the driving device drives the laser emitting device to move by a first angle toward the center of the receiver, and reads the second distance d2 between the second receiving point of the laser line on the receiving window and the center of the receiver

obtain the distance L between the laser emitting device and the center of the receiver

obtain the second angle of movement to be moved by the laser emitting device

determine the number of pulses m to be moved by the driving device

the driving device moves m pulses, causing the laser emitting device to move by the second angle of movement and emit a laser line aligned with the center of the receiver

Figure 1

Figure 2

Figure 3

# EP 4 782 954 A1

## INTERNATIONAL SEARCH REPORT

| | International application No. |
|---|---|
| | **PCT/CN2025/077758** |

### A. CLASSIFICATION OF SUBJECT MATTER

G05D3/10(2006.01)i

According to International Patent Classification (IPC) or to both national classification and IPC

### B. FIELDS SEARCHED

Minimum documentation searched (classification system followed by classification symbols)

IPC:G05D,G01C,G01B,G01S,G08B,G01N

Documentation searched other than minimum documentation to the extent that such documents are included in the fields searched

Electronic data base consulted during the international search (name of data base and, where practicable, search terms used)

CNABS, CNTXT, VEN, ENTXTC, WPABSC, CNKI: 激光, 线, 光束, 追踪, 定位, 对准, 校准, 发射, 接收, 窗口, 中心, 距离, 长度, 移动, 转动, 角度, 脉冲, 数, 三角函数, laser, line, beam, track, positioning, alignment, calibration, transmit, receive, window, center, distance, length, movement, rotating, angle, pulse, number, trigonometric function

### C. DOCUMENTS CONSIDERED TO BE RELEVANT

| Category* | Citation of document, with indication, where appropriate, of the relevant passages | Relevant to claim No. |
|---|---|---|
| Y | CN 112117835 A (HUAWEI TECHNOLOGIES CO., LTD. et al.) 22 December 2020 (2020-12-22)<br>description, paragraphs 0119-0240, and figures 1-9 | 1-5 |
| Y | CN 110186399 A (ZHUHAI GREE ELECTRIC APPLIANCES INC.) 30 August 2019 (2019-08-30)<br>description, paragraphs 0045-0078, and figures 1-3 | 1-5 |
| Y | CN 118089597 A (TIANJIN LANHAI HUITING TECHNOLOGY CO., LTD.) 28 May 2024 (2024-05-28)<br>description, paragraphs 0021-0056, and figures 1-18 | 1-5 |
| Y | CN 117439290 A (LOCKIN TECHNOLOGY (BEIJING) CO., LTD.) 23 January 2024 (2024-01-23)<br>description, paragraphs 0022-0081, and figures 1-3 | 1-5 |
| Y | CN 114353729 A (XIANG YANG DA AN AUTOMOBILE TEST CENTER CORP., LTD.) 15 April 2022 (2022-04-15)<br>description, paragraphs 0018-0034, and figures 1-13 | 1-5 |

✓ Further documents are listed in the continuation of Box C.    ✓ See patent family annex.

| | |
|---|---|
| \*   Special categories of cited documents:<br>"A"   document defining the general state of the art which is not considered to be of particular relevance<br>"D"   document cited by the applicant in the international application<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| **28 May 2025** | **05 June 2025** |

| Name and mailing address of the ISA/CN | Authorized officer |
|---|---|
| **China National Intellectual Property Administration (ISA/ CN)**<br>**China No. 6, Xitucheng Road, Jimenqiao, Haidian District, Beijing 100088** | |
| | Telephone No. |

Form PCT/ISA/210 (second sheet) (July 2022)

**EP 4 782 954 A1**

| International application No. |
| --- |
| **PCT/CN2025/077758** |

**C.    DOCUMENTS CONSIDERED TO BE RELEVANT**

| Category* | Citation of document, with indication, where appropriate, of the relevant passages | Relevant to claim No. |
| --- | --- | --- |
| A | CN 102057248 A (TRIMBLE NAVIGATION, LTD.) 11 May 2011 (2011-05-11) entire document | 1-5 |
| A | CN 109387827 A (NORTHWEST INSTRUMENT SHANGHAI CO., LTD. et al.) 26 February 2019 (2019-02-26) entire document | 1-5 |
| A | CN 1780181 A (HUAQIAO ELECTRONIC ENTERPRISE CO., LTD., XIAMEN) 31 May 2006 (2006-05-31) entire document | 1-5 |
| A | CN 112269186 A (HUAZHONG UNIVERSITY OF SCIENCE AND TECHNOLOGY EZHOU INDUSTRIAL TECHNOLOGY RESEARCH INSTITUTE et al.) 26 January 2021 (2021-01-26) entire document | 1-5 |
| A | JP H10268050 A (TOSHIBA CORP.) 09 October 1998 (1998-10-09) entire document | 1-5 |

Form PCT/ISA/210 (second sheet) (July 2022)

## INTERNATIONAL SEARCH REPORT
### Information on patent family members

International application No.

**PCT/CN2025/077758**

| Patent document cited in search report | | | Publication date (day/month/year) | Patent family member(s) | | | Publication date (day/month/year) |
|---|---|---|---|---|---|---|---|
| CN | 112117835 | A | 22 December 2020 | None | | | |
| CN | 110186399 | A | 30 August 2019 | None | | | |
| CN | 118089597 | A | 28 May 2024 | None | | | |
| CN | 117439290 | A | 23 January 2024 | None | | | |
| CN | 114353729 | A | 15 April 2022 | None | | | |
| CN | 102057248 | A | 11 May 2011 | WO | 2009154625 | A1 | 23 December 2009 |
| | | | | DE | 112008003912 | T5 | 26 May 2011 |
| | | | | DE | 112008003912 | B4 | 16 May 2019 |
| | | | | DE | 112008003912 | B8 | 01 August 2019 |
| | | | | US | 2011141488 | A1 | 16 June 2011 |
| | | | | US | 8526014 | B2 | 03 September 2013 |
| | | | | US | 2013308141 | A1 | 21 November 2013 |
| | | | | US | 8743376 | B2 | 03 June 2014 |
| CN | 109387827 | A | 26 February 2019 | None | | | |
| CN | 1780181 | A | 31 May 2006 | None | | | |
| CN | 112269186 | A | 26 January 2021 | None | | | |
| JP | H10268050 | A | 09 October 1998 | JP | 3519567 | B2 | 19 April 2004 |

Form PCT/ISA/210 (patent family annex) (July 2022)